# EUROPÄISCHE PATENTSCHRIFT

(11) **EP 1 235 951 B1**
(45) Veröffentlichungstag und Bekanntmachung des Hinweises auf die Patenterteilung: **11.06.2003**
(21) Anmeldenummer: 00979639.2
(22) Anmeldetag: 29.11.2000
(51) Int. Cl.: C25D 13/10, C09D 5/44

(54) **VERFAHREN ZUR ELEKTROTAUCHLACKIERUNG**
ELECTRO-DIP COATING METHOD
PROCEDE POUR PEINTURE ELECTROPHORETIQUE

(30) Priorität: 04.12.1999 DE 19958487
(43) Veröffentlichungstag der Anmeldung: 04.09.2002
(73) Patentinhaber: E.I. DU PONT DE NEMOURS AND COMPANY, Wilmington Delaware 19898 (US)
(72) Erfinder: DAVID, Norbert, 42579 Heiligenhaus (DE); KLEIN, Klausjörg, 42289 Wuppertal (DE); KÜHHIRT, Walter, 42857 Remscheid (DE)
(74) Vertreter: Gille Hrabal Struck Neidlein Prop Roos
(86) Internationale Anmeldenummer: EP0011951
(87) Internationale Veröffentlichungsnummer: WO01040550

(56) Entgegenhaltungen:
- EP-A- 0 476 821
- DE-C- 3 614 599
- DE-C- 19 958 487
- US-A- 2 940 943
- DATABASE WPI Section Ch, Week 197749 Derwent Publications Ltd., London, GB; Class A11, AN 1977-87274Y XP002168307 & JP 52 127930 A (OHTA T), 27. Oktober 1977 (1977-10-27) in der Anmeldung erwähnt
- PATENT ABSTRACTS OF JAPAN vol. 1996, no. 04, 30. April 1996 (1996-04-30) & JP 07 330801 A (ASAHI CHEM IND CO LTD), 19. Dezember 1995 (1995-12-19)

## Beschreibung

Die Erfindung betrifft ein Verfahren zur kathodischen Elektrotauchlackierung (KTL), unter Verwendung von wasserunlöslichen organischen Nitriten und/oder Nitraten als Zusätze zu den kathodisch abscheidbaren Elektrotauchlack-Überzugsmitteln, um die Haftung von Nachfolgeschichten auf aus daraus erstellten Überzügen zu verbessern.

Kathodisch abscheidbare Elektrotauchlacke (KT-Lacke) werden insbesondere zur Herstellung von korrosionsschützenden Grundierungen auf metallischen Untergründen, wie beispielsweise Automobilkarossen verwendet. Die durch Elektroabscheidung aus ET-Lacken abgeschiedenen Überzugsschichten werden anschließend in großen Umluftöfen, die direkt oder indirekt beheizt sein können, eingebrannt und mit weiteren Überzugsschichten versehen. Direkt beheizte Umluftöfen werden durch Verbrennung beispielsweise von Erdgas beheizt, wobei die Verbrennungsabgase in die Ofenumluft gelangen. In indirekt mittels Wärmetauschern beheizten Umluftöfen gelangen keine Verbrennungsabgase in die Ofenumluft.

In der industriellen Praxis wurde festgestellt, daß die Haftung von auf eingebrannten KTL-Überzugsschichten aufgebrachten Folgeüberzugsschichten, insbesondere Unterbodenschutzschichten oftmals unzureichend ist, wenn die KTL-Vorbeschichtung in indirekt beheizten Umluftöfen eingebrannt worden ist.

Aufgabe der Erfindung ist die Verbesserung oder Gewährleistung einer ausreichenden Haftung von Überzugsschichten auf zuvor in indirekt beheizten Umluftöfen eingebrannten KTL-Überzugsschichten. Insbesondere gilt dies im Zusammenhang mit auf KTL-Überzugsschichten aufzubringenden Unterbodenschutzschichten.

Die Lösung der Aufgabe gelingt, wenn man für im Anschluß an ihre Elektroabscheidung in indirekt beheizten Umluftöfen einzubrennenden KTL-Überzugsschichten solche KT-Lacke verwendet, die schwer oder nicht flüchtige, wasserunlösliche organische Nitrite und/oder Nitrate enthalten.

In der JP 52127930 werden zwar Elektrotauchlack(ETL)-Überzugsmittel beschrieben, die verschiedene Cellulosederivate, wie beispielsweise Cellulosenitrat enthalten können, jedoch findet sich kein Hinweis auf eine Verbesserung der Haftung von Nachfolgeschichten auf Überzügen, die aus organisches Nitrit und/oder Nitrat enthaltenden ETL-Überzugsmitteln erhalten wurden.

In der DE 36 14 599 C wird ein Verfahren zum Einbrennen von kathodisch abscheidbaren Elektrotauchlacken (KTL), welche verlaufsfördernde Additive enthalten, in einem indirekt beheizten Ofen beschrieben, wobei auf den eingebrannten KTL beispielsweise Füller oder Unterbodenschutzmittel aufgetragen werden. In dem Ofen wird ein Gehalt an Stickoxiden von wenigstens 1 mg/m³ eingestellt. Dieser Minimalgehalt an Stickoxiden ist erforderlich um die Haftung zwischen der KTL-Schicht und den weiteren Schichten zu verbessern.

Gegenstand der vorliegenden Erfindung ist ein Verfahren zur Herstellung einer Elektrotauchlack-Überzugsschicht mit verbesserter Haftung für Nachfolgeschichten durch kathodische Abscheidung einer Überzugsschicht aus einem kathodisch abscheidbaren Elektrotauchlack-Überzugsmittel auf einem elektrisch leitfähigen Substrat und Einbrennen, das dadurch gekennzeichnet ist, daß man dem kathodisch abscheidbaren Elektrotauchlack-Überzugsmittel ein oder mehrere wasserunlösliche organische Nitrite und/oder Nitrate zusetzt und das Einbrennen in einem indirekt beheizten Umluftofen vornimmt, wobei der in den Umluftofen eingeführte Frischluftanteil 0 bis 20 Vol.-% der Ofenluft beträgt.

Gegenstand der Erfindung ist auch ein Verfahren, bei dem auf die vorstehend erhaltene Überzugsschicht eine Nachfolgeschicht, insbesondere eine übliche Unterbodenschutzschicht aufgetragen wird.

Der Ausdruck "wasserunlösliche organische Nitrite und/oder Nitrate" wird im folgenden abgekürzt durch "Nitrite und/oder Nitrate" ersetzt.

Bei den erfindungsgemäß verwendeten KTL-Überzugsmitteln handelt es sich um wäßrige Überzugsmittel mit einem Festkörper von beispielsweise 10 bis 30 Gew.-%. Der Festkörper der KTL-Überzugsmittel wird durch den Harzfestkörper, Pigmente, Füllstoffe, weitere lackübliche Additive und den erfindungswesentlichen Anteil an Nitriten und/oder Nitraten gebildet. Der Harzfestkörper der KTL-Überzugsmittel setzt sich zusammen aus dem oder den Bindemitteln und gegebenenfalls enthaltene(n) Vernetzerharze(n). Gegebenenfalls in den KTL-Überzugsmitteln enthaltene Anreibeharze (Pastenharze) werden zu den Bindemitteln gezählt. Zumindest ein Teil der Bindemittel trägt ionische und/oder in ionische Gruppen überführbare Substituenten. Die Bindemittel können selbst- oder fremdvernetzend sein, im letzteren Fall tragen sie zur chemischen Vernetzung fähige Gruppen und die KTL-Überzugsmittel enthalten dann Vernetzer. Auch die Vernetzer können ionische Gruppen aufweisen.

Die ionischen Gruppen oder in ionische Gruppen überführbaren Gruppen der ionischen Bindemittel sind kationische oder in kationische Gruppen überführbare, z.B. basische Gruppen, bevorzugt stickstoffhaltige basische Gruppen; diese Gruppen können quaternisiert vorliegen oder sie werden mit einem üblichen Neutralisationsmittel, z.B. einer Sulfonsäure wie Amidosulfonsäure (Sulfaminsäure) oder Methansulfonsäure oder einer organischen Monocarbonsäure, wie Ameisensäure, Essigsäure oder Milchsäure in kationische Gruppen überführt. Beispiele sind Amino-, Ammonium-, z.B. quartäre Ammonium-, Phosponium-, und/oder Sulfonium-Gruppen. Vorhandene Aminogruppen können primär, sekundär und/oder tertiär sein. Die in ionische Gruppen überführbaren Gruppen können ganz oder teilweise neutralisiert vorliegen.

Die Bindemittel tragen übliche zur chemischen Vernetzung fähige, funktionelle Gruppen, beispielsweise Hydroxylgruppen, beispielsweise entsprechend einer Hydroxylzahl von 30 bis 300, bevorzugt 50 bis 250 mg KOH/g.

Die erfindungsgemäß verwendeten KTL-Überzugsmittel sind an sich bekannt. Sie enthalten übliche kathodisch abscheidbare Bindemittel, beispielsweise primäre, sekundäre und/oder tertiäre Aminogruppen enthaltende Harze. Deren Aminzahlen liegen z.B. bei 20 bis 250 mg KOH/g. Das Gewichtsmittel der Molmasse (Mw) dieser KTL-Bindemittel liegt bevorzugt bei 300 bis 10000. Die Harze können nach Quaternisierung oder Neutralisation von mindestens einem Teil der basischen Gruppen in die Wasserphase überführt werden. Beispiele für solche KTL-Bindemittel sind Aminoepoxidharze, Aminoepoxidharze mit endständigen Doppelbindungen, Aminoepoxidharze mit primären OH-Gruppen, Aminopolyurethanharze, aminogruppenhaltige Polybutadienharze und/oder modifizierte Epoxidharz-Kohlendioxid-Amin-Umsetzungsprodukte sowie Amino(meth)acrylatharze. Die KTL-Bindemittel können in üblicher Weise selbstvernetzend sein oder sie werden mit bekannten Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen oder Vernetzer, die umesterungsfähige Gruppen enthalten.

Die kationischen Bindemittel können als KTL-Bindemitteldispersion, die Vernetzer enthalten kann, zur Herstellung der erfindungsgemäß verwendeten KTL-Überzugsmittel eingesetzt werden. KTL-Bindemitteldispersionen können hergestellt werden durch Synthese von KTL-Bindemitteln in Anwesenheit oder Abwesenheit organischer Lösemittel und Überführung in eine wäßrige Dispersion durch Verdünnen der mit Neutralisationsmittel neutralisierten KTL-Bindemittel mit Wasser. Das oder die KTL-Bindemittel können im Gemisch mit einem oder mehreren geeigneten Vernetzern vorliegen und gemeinsam mit diesen in die wäßrige Dispersion überführt werden. Organisches Lösemittel kann, sofern vorhanden, vor oder nach Überführung in die wäßrige Dispersion bis zum gewünschten Gehalt entfernt werden, beispielsweise durch Destillation im Vakuum. Die nachträgliche Entfernung von Lösemitteln kann beispielsweise vermieden werden, wenn die gegebenenfalls im Gemisch mit Vernetzern vorliegenden KTL-Bindemittel im lösemittelarmen oder lösemittelfreien Zustand, z.B. als lösemittelfreie Schmelze bei Temperaturen von beispielsweise bis zu 140°C mit Neutralisationsmittel neutralisiert und anschließend mit Wasser in die KTL-Bindemitteldispersion überführt werden. Ebenfalls ist es möglich, die Entfernung organischer Lösemittel zu vermeiden, wenn die KTL-Bindemittel als Lösung in einem oder mehreren radikalisch polymerisierbaren, olefinisch ungesättigten Monomeren vorgelegt werden oder die Bindemittelsynthese in einem oder mehreren radikalisch polymerisierbaren Monomeren (z.B. Styrol) als Lösemittel durchgeführt wird, danach durch Neutralisation mit Neutralisationsmittel und Verdünnen mit Wasser in eine wäßrige Dispersion überführt wird und anschließend die radikalisch polymerisierbaren Monomeren auspolymerisiert werden.

Die erfindungsgemäß verwendeten KTL-Überzugsmittel enthalten Nitrite und/oder Nitrate insbesondere in einer Menge, die ausreichend ist, daß eine anschließend auf die in einem indirekt beheizten Umluftofen eingebrannte KTL-Überzugsschicht aufgebrachte Überzugsschicht, insbesondere beispielsweise eine Unterbodenschutzschicht, eine ausreichende Haftung aufweist. Die Nitrite und/oder Nitrate sind in den KTL-Überzugsmitteln beispielsweise entsprechend einem Gehalt von 0,05 bis 0,5 Gew.-% als organisch gebundenes Nitrit und/oder Nitrat vorliegendem Stickstoff, bezogen auf den Harzfestkörper, enthalten.

Bei den Nitriten und/oder Nitraten handelt es sich um Ester der salpetrigen Säure bzw. der Salpetersäure mit Alkoholen, wie beispielsweise niedermolekularen Monooder Polyalkoholen, insbesondere jedoch um Ester der salpetrigen Säure oder der Salpetersäure von mono- oder polyhydroxyfunktionellen Polymeren. Bevorzugt sind Nitrate.

Insbesondere handelt es sich um unter den Bedingungen der Formulierung und Anwendung sowie des Einbrennens der Elektrotauchlacke schwer- oder nichtflüchtige Verbindungen. Aufgrund ihrer Wasserunlöslichkeit können die Nitrite und/oder Nitrate gemeinsam mit den anderen den Festkörper des KTL-Überzugsmittels ausmachenden Bestandteilen durch Elektroabscheidung aus den KTL-ÜberzugsmitteIn auf elektrisch leitfähigen Substraten abgeschieden werden.

Ein Beispiel für ein in den erfindungsgemäß verwendeten KTL-Überzugsmitteln besonders bevorzugt verwendetes Nitrat ist Cellulosenitrat mit einem Gehalt von als organisch gebundenem Nitrat vorliegendem Stickstoff von 6,7 bis 12,5, bevorzugt 10,5 bis 12,5 Gew.-%. Wird das besonders bevorzugte Cellulosenitrat mit 10,5 bis 12,5 Gew.-% Stickstoffgehalt als nicht flüchtiges, wasserunlösliches organisches Nitrat in den erfindungsgemäß verwendeten KTL-Überzugsmitteln eingesetzt, so beträgt sein Gehalt beispielsweise 1 bis 4 Gew.-%, bezogen auf den Harzfestkörper des KTL-Überzugsmittels. Cellulosenitrat kann für die Zwecke der vorliegenden Erfindung als mit Alkohol, beispielsweise Butanol angefeuchtete Ware oder als organische Lösung in Lösemitteln wie beispielsweise Alkoholen, Estern, Ketonen, Glykolethern, Glykolesterm, Glykoletherestern und deren Gemischen verwendet werden. Falls Weichmacher im KTL-Überzug nicht stören, kann für die Zwecke der vorliegenden Erfindung auch im Handel erhältliches, mit Weichmacher phlegmatisiertes Cellulosenitrat verwendet werden.

Wie im folgenden noch näher erläutert, können die Nitrite und/oder Nitrate auf verschiedene Art und Weise, beispielsweise von vornherein bei der Herstellung der erfindungsgemäß verwendeten KTL-Überzugsmittel oder nachträglich zu den KTL-Überzugsmitteln zugesetzt werden, beispielsweise unmittelbar vor oder bei der Verwendung zur Elektrotauchlackierung.

Zusätzlich zu dem oder den Bindemitteln, Wasser sowie dem erfindungswesentlichen Gehalt an Nitriten und/oder Nitraten und gegebenenfalls vorhandenem Vernetzer können die erfindungsgemäß verwendeten KTL-Überzugsmittel Pigmente, Füllstoffe, Lösemittel und/oder lackübliche Additive enthalten.

Beispiele für Pigmente sind übliche anorganische und/oder organische Pigmente, wie z.B. Titandioxid, Eisenoxidpigmente, Ruß. Beispiele für Füllstoffe sind Kaolin, Talkum oder Siliciumdioxid. Die KTL-Überzugsmittel können auch Korrosionsschutzpigmente enthalten. Beispiele dafür sind Zinkphosphat oder organische Korrosionsinhibitoren.

Pigmente und/oder Füllstoffe können in einem Teil des Bindemittels dispergiert und dann auf einem geeigneten Aggregat, z.B. einer Perlmühle vermahlen werden, wonach eine Komplettierung durch Vermischen mit dem noch fehlenden Anteil an Bindemittel erfolgt. Aus diesem Material kann dann - sofern nicht schon zuvor geschehen, nach Zusatz von Neutralisationsmittel - durch Verdünnen mit Wasser das KTL-Überzugsmittel bzw. -bad hergestellt werden (Einkomponenten-Verfahrensweise).

Pigmentierte KTL-Überzugsmittel bzw. -bäder können aber auch durch Vermischen einer KTL-Bindemitteldispersion und einer separat hergestellten Pigmentpaste hergestellt werden (Zweikomponenten-Verfahrensweise). Dazu wird eine KTL-Bindemitteldispersion beispielsweise weiter mit Wasser verdünnt und danach eine wäßrige Pigmentpaste zugefügt. Wäßrige Pigmentpasten werden nach dem Fachmann bekannten Methoden hergestellt, bevorzugt durch Dispergieren der Pigmente und/oder Füllstoffe in für diese Zwecke üblichen Pastenharzen.

Das Pigment plus Füllstoff/Bindemittel plus Vemetzer-Gewichtsverhältnis der erfindungsgemäß verwendeten KTL-Überzugsmittel beträgt beispielsweise von 0 : 1 bis 0,8 : 1, bevorzugt beträgt es für pigmentierte Lacke zwischen 0,05 : 1 und 0,4 : 1.

Die erfindungsgemäß verwendeten KTL-Überzugsmittel können neben den Nitriten und/oder Nitraten gegebenenfalls weitere Additive enthalten, beispielsweise in Mengenanteilen von 0,1 bis 5 Gew.-%, bezogen auf den Harzfestkörper. Dabei handelt es sich insbesondere um solche, wie sie für KTL-Überzugsmittel bekannt sind, beispielsweise Netzmittel, Neutralisationsmittel, Verlaufsmittel, Katalysatoren, Korrosionsinhibitoren, Antischaummittel, Lichtschutzmittel, Antioxidantien, sowie übliche Antikrateradditive. Die Additive können auf beliebige Weise, beispielsweise während der Bindemittelsynthese, während der Herstellung von KTL-Bindemitteldispersionen, über eine Pigmentpaste oder auch separat in die KTL-Überzugsmittel eingebracht werden.

Die erfindungsgemäß verwendeten KTL-Überzugsmittel können auch übliche Lösemittel in den für KTL-Überzugsmittel üblichen Anteilen enthalten. Derartige für KTL-Überzugsmittel übliche Lösemittel sind beispielsweise Glykolether, wie Butylglykol und Ethoxypropanol und Alkohole, wie Butanol. Die Lösemittel können auf verschiedene Weise in die KTL-Überzugsmittel gelangen, beispielsweise als Bestandteil von Bindemittel- oder Vernetzerlösungen, über eine KTL-Bindemitteldispersion, als Bestandteil einer Pigmentpaste oder auch durch separaten Zusatz. Der Lösemittelgehalt der KTL-Überzugsmittel beträgt beispielsweise zwischen 0 bis einschließlich 5 Gew.-%, bezogen auf beschichtungsfähiges KTL-Bad.

Die erfindungsgemäß verwendeten KTL-Überzugsmittel können nach den bekannten Verfahren zur Herstellung von KTL-Bädern bereitet werden, d.h. grundsätzlich sowohl mittels der vorstehend beschriebenen Einkomponenten- als auch mittels der Zweikomponenten-Verfahrensweise.

Die Herstellung der erfindungsgemäß verwendeten KTL-Überzugsmittel kann beispielsweise so erfolgen, daß die Nitrite und/oder Nitrate in ihrer Lieferform oder als organische Lösung mit den übrigen Bestandteilen des KTL-Überzugsmittels vermischt werden. Die Nitrite und/oder Nitrate können dabei auf verschiedene Art und Weise, beispielsweise von vornherein bei der Herstellung der KTL-Überzugsmittel, oder nachträglich zu den KTL-Überzugsmitteln zugesetzt werden.

Beispielsweise wird zunächst mit Bindemittel vermischt, bevor die weiteren Bestandteile hinzugemischt werden.

Bei der Herstellung der erfindungsgemäß verwendeten KTL-Überzugsmittel nach der Einkomponenten-Verfahrensweise kann beispielsweise so gearbeitet werden, daß die Nitrite und/oder Nitrate in Gegenwart der in nichtwäßriger Phase vorliegenden Bestandteile des KTL-Überzugsmittels vorliegen und gemeinsam mit diesen durch Verdünnen mit Wasser in die wäßrige Phase überführt werden. Beispielsweise können Pigmente und/oder Füllstoffe in einem Teil des Bindemittels und/oder Vernetzers dispergiert und dann auf einem geeigneten Aggregat, z.B. einer Perlmühle vermahlen werden, wonach eine Komplettierung durch Vermischen mit dem noch fehlenden Anteil an Bindemittel und/oder Vernetzer erfolgt. Dabei können die Nitrite und/oder Nitrate im zum Dispergieren und/oder im zur Komplettierung verwendeten Bindemittel und/oder Vernetzer enthalten sein. Aus dem so erhaltenen Material kann dann - sofern nicht schon zuvor geschehen, nach Zusatz von Neutralisationsmittel- durch Verdünnen mit Wasser das KTL-Überzugsmittel bzw. -bad hergestellt werden.

Bei der Herstellung der KTL-Überzugsmittel nach der Zweikomponenten-Verfahrensweise kann beispielsweise auch so gearbeitet werden, daß die Nitrite und/oder Nitrate in Gegenwart der in nichtwäßriger Phase vorliegenden ionischen Bindemittel vorliegen und gemeinsam mit diesen - sofern nicht schon zuvor geschehen, nach Zusatz von Neutralisationsmittel - durch Verdünnen mit Wasser in die wäßrige Phase überführt werden. Dabei wird eine die Nitrite und/oder Nitrate enthaltende KTL-Bindemitteldispersion erhalten. Aus einer so erhaltenen KTL-Bindemitteldispersion kann dann durch Vermischen mit einer separaten Pigmentpaste ein pigmentiertes KTL-Überzugsmittel bzw. -bad hergestellt werden. Alternativ kann bei Anwendung der Zweikomponenten-Verfahrensweise auch so gearbeitet werden, daß zu einer KTL-Bindemitteldispersion eine wäßrige, Nitrite und/oder Nitrate enthaltende Pigmentpaste hinzugefügt wird.

Die Nitrite und/oder Nitrate können den KTL-Überzugsmitteln auch separat zugesetzt werden. Beispielsweise ist es dabei auch möglich, den separaten Zusatz nachträglich, zu beschichtungsfertigen KTL-Bädern durchzuführen. Die Nitrite und/oder Nitrate werden dazu in eine wasserverdünnbare Form überführt; beispielsweise kann der separate, insbesondere nachträgliche Zusatz als Bestandteil einer wäßrigen, beispielsweise separat hergestellten Pigmentpaste erfolgen, oder die Nitrite und/oder Nitrate können mittels eines wasserverdünnbaren Bindemittels, insbesondere als Bestandteil einer KTL-Bindemitteldispersion oder in einem wäßrigen KTL-Pastenharz oder unter Zuhilfenahme geeigneter Emulgatoren zugegeben werden, beispielsweise nach den im vorstehenden Absatz beschriebenen Prinzipien.

Erfindungsgemäß werden aus den die Nitrite und/oder Nitrate enthaltenden KTL-Überzugsmitteln KTL-Überzugsschichten beispielsweise in einer Trockenschichtdicke von 10 bis 30 µm auf verschiedene elektrisch leitfähige oder elektrisch leitfähig gemachte Substrate, insbesondere metallische Substrate aufgebracht und in indirekt beheizten Umluftöfen bei Objekttemperaturen von beispielsweise 160 - 190°C eingebrannt Mit dem Begriff "indirekt beheizte Umluftöfen" sind solche Umluftöfen gemeint, bei denen keine Verbrennungsabgase in die Ofenumluft gelangen und die bevorzugt ohne oder mit einem nur geringen Frischluftanteil betrieben werden, wie es bei in der industriellen Praxis betriebenen indirekt beheizten Umluftöfen der Fall ist. Der Volumenanteil an Frischluft liegt, bezogen auf das umgewälzte Umluftvolumen pro Zeiteinheit bei unter 20 %, bevorzugt unter 10 %. Bevorzugt liegt im erfindungsgemäßen Verfahren während des Einbrennens ein Verhältnis von Ofenraum zu einzubrennender KTL-Fläche von bis zu 2, beispielsweise 0,2 bis 2 Kubikmeter pro Quadratmeter oder weniger vor. An einem Beispiel aus der Autoserienlackierung seien die Dimensionen verdeutlicht: Beispielsweise befinden sich in einem industriell betriebenen Umluftofen mit 1000 Kubikmeter Rauminhalt zugleich 25 jeweils 80 Quadratmeter einzubrennende KTL-Schicht aufweisende Karossen, die Umluftleistung beträgt 150000 Kubikmeter pro Stunde bei einer Abluft- und Frischluftleistung von jeweils 12000 Kubikmeter pro Stunde. Zur Simulation des Einbrennvorgangs in einem in der industriellen Praxis betriebenen indirekt beheizten Umluftofen kann ein Laborumluftofen verwendet werden, dessen Frischluftanteil auf unter 20, bevorzugt unter 10 % begrenzt werden kann und in dem bevorzugt ein Verhältnis von 0,2 bis 2 Kubikmeter Ofenraum pro Quadratmeter einzubrennender KTL-Beschichtung eingehalten wird.

Das erfindungsgemäße Verfahren bzw. die erfindungsgemäße Verwendung eignet sich insbesondere auf dem Kraftfahrzeugsektor, beispielsweise zur Herstellung einer korrosionsschützenden KTL-Grundierung von Kraftfahrzeugkarosserien oder Kraftfahrzeugkarosserieteilen, die anschließend mit weiteren Überzugsschichten, insbesondere beispielsweise Unterbodenschutzschichten versehen werden.

Es können die üblichen bei der Kraftfahrzeuglackierung verwendeten Unterbodenschutzschichten aufgetragen werden. Es handelt sich dabei beispielsweise um Überzugsmittel, die auf Polyvinylchlorid-(PVC)-Plastisolen basieren. Diese werden insbesondere auf steinschlaggefährdete Stellen im Unterbodenbereich von Kraftfahrzeugen aufgebracht. Der Auftrag erfolgt im allgemeinen in hohen Schichtdicken, beispielsweise von 0,5 bis 3 mm.

Ohne eine bindende Erklärung anzugeben, wird als theoretische Erläuterung angenommen, daß sich die im erfindungsgemäßen Verfahren als Bestandteil der KTL-Überzugsschicht mit abgeschiedenen Nitrite und/oder Nitrate bei den beim Einbrennen herrschenden Lufttemperaturen von beispielsweise 150 bis 220°C unter Abspaltung von Stickstoffoxiden, im folgenden als NOₓ bezeichnet, zersetzen und das in die Ofenumluft abgegebene NOₓ eine verbesserte oder ausreichende Haftung von nachfolgend aufgebrachten Überzugsschichten bewirkt.

Das erfindungsgemäße Verfahren gewährleistet eine gute Haftung von auf in indirekt beheizten Umluftöfen eingebrannten KTL-Überzugsschichten aufgebrachten Folgeüberzugsschichten wie insbesondere beispielsweise Unterbodenschutzschichten. Auch vorstellbare Maßnahmen zur Haftungsverbesserung wie der Einsatz teurer Haftvermittler in den zur Applikation der Folgeüberzugsschichten verwendeten Überzugsmitteln können vermieden werden.

### Beispiel 1 (Herstellung von Wismutlactat)

901 Teile einer 70 gew.-%igen Lösung von Milchsäure in Wasser werden auf 70°C erwärmt. Unter Rühren werden 466 Teile handelsübliches Wismutoxid (Bi₂O₃) portionsweise zugegeben. Nach weiteren 6 Stunden Rühren bei 70°C wird der Ansatz auf 20°C gekühlt und 12 Stunden ohne Rühren belassen. Schließlich wird der Niederschlag abfiltriert, mit wenig Wasser und Ethanol gewaschen und bei 50°C getrocknet.

### Beispiel 2 (Herstellung einer KTL-Dispersion)

a) 832 Teile des Monocarbonats eines Epoxidharzes auf der Basis von Bisphenol A (Handelsprodukt Epikote 828) werden mit 830 Teilen eines handelsüblichen Polycaprolactonpolyols (Handelsprodukt CAPA 205) und 712 Teilen Diglykoldimethylether gemischt und bei 70 bis 140°C mit 0,3 % BF₃-Etherat zur Reaktion gebracht, bis eine Epoxidzahl von 0 erreicht wird. Zu diesem Produkt (Festkörper 70 %, 2 Äquivalente Carbonat) werden bei 40 bis 80°C in Gegenwart von 0,3 % Zn-Acetylacetonat als Katalysator 307 Teile eines Umsetzungsproduktes aus 174 Teilen Toluylendiisocyanat (2 Äquivalente NCO) mit 137 Teilen 2-Ethylhexanol mit einem NCO-Gehalt von 12,8 % zugegeben. Es wird bis zu einem NCO-Wert von 0 umgesetzt und dann mit Diglykoldimethylether auf 70 % Festkörper eingestellt.
b) Zu 1759 Teilen eines Biscarbonats eines Epoxidharzes auf der Basis von Bisphenol A (Handelsprodukt Epicote 1001) werden bei 60 bis 80°C 618 Teile eines Umsetzungsproduktes aus 348 Teilen Toluylendiisocyanat (80 % 2,4-Isomeres; 20 % 2,6-Isomeres) mit 274 Teilen 2-Ethylhexanol mit einem Rest-NCO-Gehalt von 12,8 % langsam zugegeben. Die Reaktion wird bis zu einem NCO-Wert von 0 fortgesetzt und dann mit Diglykoldimethylether auf 70 % Festkörper eingestellt.
c) Zu 860 Teilen Bishexamethylentriamin gelöst in 2315 Teilen Methoxypropanol werden bei einer Temperatur von 30°C 622 Teile des Umsetzungsproduktes aus 137 Teilen 2-Ethylhexanol mit 174 Teilen Toluylendiisocyanat zugegeben (NCO-Gehalt 12,8 %) und bis zu einem NCO-Gehalt von 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von 32 mg KOH/g wird die Reaktion beendet. Das entstehende Produkt wird im Vakuum auf einen Festkörper von 85 % abdestilliert.
d) Es wird mit 30 mmol Ameisensäure/100 g Harz neutralisiert. Danach wird auf 70°C erhitzt und Wismutlactat unter Rühren portionsweise in einer solchen Menge zugegeben, daß 1 Gew.-% Wismut, bezogen auf Feststoffgehalt im Ansatz vorhanden sind. Anschließend wird noch 6 Stunden bei 60°C gerührt und abgekühlt. Es wird mit deionisiertem Wasser in eine Dispersion mit einem Festkörper von 40 Gew.-% überführt.

### Beispiel 3 (Herstellung einer Pigmentpaste)

Zu 223 Teilen des Pastenharzes nach EP-A-0 469 497 A1 Beispiel 1 (55 %) werden unter einem schnellaufenden Rührwerk 15 Teile Essigsäure (50 %), 30 Teile eines handelsüblichen Netzmittels (50 %) und 350 Teile deionisiertes Wasser gegeben. Dazu werden 12,3 Teile Ruß und 430 Teile Titandioxid gegeben. Mit deionisiertem Wasser wird auf einen Festkörper von 53 Gew.-% eingestellt und auf einer Perlmühle vermahlen. Es entsteht eine stabile Pigmentpaste.

### Beispiel 4 (Herstellung einer Pigmentpaste)

Beispiel 3 wird wiederholt, wobei vor Zusatz der Essigsäure 20,5 Teile 65 gew.-%iges Cellulosenitrat (65 Teile Cellulosenitrat mit einem Stickstoffgehalt von 11 Gew.-%, angefeuchtet mit 35 Teilen Butanol) zugesetzt werden.

### Beispiel 5 (Herstellung eines KTL-Bades und -Beschichtung, Vergleich)

Durch Vermischen der KTL-Dispersion aus Beispiel 2, deionisiertem Wasser und Zusatz der Pigmentpaste aus Beispiel 3 unter gutem Rühren wird in üblicher Weise ein KTL-Bad mit einem Festkörpergehalt von 20 Gew.-% und einem Pigment/Bindemittel-Gewichtsverhältnis von 0,5 : 1 hergestellt. Aus dem mit Ameisensäure auf einen Säure-Gehalt von 35 Milliäquivalente/100 g Festkörper eingestellten KTL-Bad werden 10 Bleche (10 cm mal 20 cm groß) aus üblichem phosphatiertem Karosseriestahl jeweils in 20 µm Trockenschichtdicke kataphoretisch beschichtet und 30 Minuten bei 160°C (Objekttemperatur) in einem elektrisch beheizten Laborumluftofen von 0,5 Kubikmeter Rauminhalt (Lufttemperatur 220°C, Frischluftanteil auf unter 8 % begrenzt) eingebrannt.

### Beispiel 6 (erfindungsgemäß)

Beispiel 5 wird wiederholt mit dem Unterschied, daß anstelle der Pigmentpaste aus Beispiel 3 die Pigmentpaste aus Beispiel 4 verwendet wird. Das KTL-Bad enthält 1,5 Gew.-% Cellulosenitrat, berechnet auf den Harzfestkörper.

### Beispiel 7 (Vergleich)

Beispiel 6 wird wiederholt mit dem Unterschied, daß der Laborumluftofen mit maximaler Frischluftzufuhr betrieben wird.

In den Beispielen 5 - 7 erhaltene KTL-beschichtete Bleche werden per Rakel jeweils mit handelsüblichem Unterbodenschutzmaterial auf PVC-Plastisol-Basis in einer Schichtdicke von 2 mm beschichtet und 20 Minuten bei 140°C (Objekttemperatur) zwecks Gelieren des Plastisols eingebrannt. In 1,5 cm-Abständen werden parallele Einschnitte in der gelierten Plastisolschicht angebracht. Mit einem Messer wird am Rand zwischen zwei Einschnitten das gelierte Plastisol vorsichtig von der KTL-Schicht abgelöst, um eine Anfaßlasche zu erhalten. Anschließend wird versucht, die Plastisolschicht manuell abzuziehen. Die Haftung ist nur bei Beispiel 6 in Ordnung. Bei Beispiel 5 und 7 kann die gelierte Plastisolschicht vom KTL-Untergrund abgezogen werden.

## Patentansprüche

1. Verfahren zur Herstellung einer Elektrotauchlack-Überzugsschicht mit verbesserter Haftung für Nachfolgeschichten durch kathodische Abscheidung einer Überzugsschicht aus einem kathodisch abscheidbaren Elektrotauchlack-Überzugsmittel auf einem elektrisch leitfähigen Substrat und Einbrennen, **dadurch gekennzeichnet, daß** man dem kathodisch abscheidbaren Elektrotauchlack-Überzugsmittel ein oder mehrere wasserunlösliche organische Nitrite und/oder Nitrate zusetzt und das Einbrennen in einem indirekt beheizten Umluftofen vornimmt, wobei der in den Umluftofen eingeführte Frischluftanteil 0 bis 20 Vol.-% der Ofenumluft beträgt.

2. Verfahren nach Anspruch 1, **dadurch gekennzeichnet, daß** die organischen Nitrite und/oder Nitrate in einer Menge von 0,05 bis 0,5 Gew.-%, berechnet als in Form von organisch gebundenem Nitrit und/oder Nitrat vorliegender Stickstoff, bezogen auf den Harzfestkörper des Elektrotauchlacküberzugsmittels, zugesetzt-werden.

3. Verfahren nach einem der vorhergehenden Ansprüche, **dadurch gekennzeichnet, daß** man bei einem Verhältnis von Ofenraum des indirekt beheizten Umluftofens zu einzubrennender mit dem kathodisch abscheidbaren Elektrotauchlack-Überzugsmittel beschichteter Fläche des elektrisch leitfähigen Substrats von bis zu 2 Kubikmeter pro Quadratmeter arbeitet.

4. Verfahren nach einem der vorhergehenden Ansprüche, **dadurch gekennzeichnet, daß** als organisches Nitrit und/oder Nitrat Ester der salpetrigen Säure und/oder Salpetersäure eines oder mehrerer mono- oder polyhydroxyfunktioneller Polymerer zugesetzt werden.

5. Verfahren nach Anspruch 4, **dadurch gekennzeichnet, daß** Cellulosenitrat zugesetzt wird.

6. Verfahren nach Anspruch 5, **dadurch gekennzeichnet, daß** das Cellulosenitrat einen Gehalt von als Nitrat gebundenem Stickstoff von 6,7 bis 12,5 Gew.-% aufweist.

7. Verfahren nach einem der vorhergehenden Ansprüche, **dadurch gekennzeichnet, daß** man auf die erhaltene Elektrotauchlack-Überzugsschicht eine oder mehrere Nachfolgeschichten aufbringt.

8. Verfahren nach einem der Ansprüche 1 bis 7, **dadurch gekennzeichnet, daß** man die Elektrotauchlack-Überzugsschicht auf ein Kraftfahrzeug oder dessen Teile aufbringt und anschließend zumindest teilweise eine Unterbodenschutzschicht aufträgt.

## Claims

1. Process for the production of an electrodeposition coating film with improved adhesion for subsequent coats by cathodic deposition of a coating film from a cathodic electrodeposition coating composition onto an electrically conductive substrate and stoving, **characterised in that** one or more water-insoluble organic nitrites and/or nitrates is added to the cathodic electrodeposition coating composition and stoving is performed in an indirectly heated circulating air oven, whereby the proportion of fresh air introduced into the circulating air oven is 0 to 20 vol.% of the circulating air in the oven.

2. Process according to claim 1, **characterised in that** the organic nitrites and/or nitrates are added in a quantity of 0.05 to 0.5 wt.%, calculated as nitrogen present in the form of organically bonded nitrite and/or nitrate, relative to the resin solids in the electrodeposition coating composition.

3. Process according to one of the preceding claims, **characterised in that** it is performed with a ratio of oven capacity in the indirectly heated circulating air oven to surface area of the electrically conductive substrate coated with the cathodic electrodeposition coating composition to be stoved of up to 2 cubic metres per square metre.

4. Process according to one of the preceding claims, **characterised in that** esters of nitrous acid and/or of nitric acid of one or more mono- or polyhydroxy-functional polymers are added as organic nitrite and/or nitrate.

5. Process according to claim 4, **characterised in that** cellulose nitrate is added.

6. Process according to claim 5, **characterised in that** the cellulose nitrate displays a content of nitrogen bonded as nitrate of 6.7 to 12.5 wt.%.

7. Process according to one of the preceding claims, **characterised in that** one or more subsequent coats is applied to the electrodeposition coating film obtained.

8. Process according to one of claims 1 to 7, **characterised in that** the electrodeposition coating film is applied to a motor vehicle or to components thereof and an underbody sealant film is then applied at least in parts.

## Revendications

1. Procédé de préparation d'une couche de revêtement-peinture électrophorétique avec adhérence améliorée pour les couches ultérieures, par précipitation cathodique d'une couche de revêtement à partir d'un agent de revêtement-peinture électrophorétique précipitable de manière cathodique sur un substrat conducteur de l'électricité et cuisson, qui est **caractérisé en ce que** l'on ajoute à l'agent de revêtement-peinture électrophorétique précipitable de manière cathodique, un ou plusieurs nitrites et/ou nitrates organiques insolubles dans l'eau et que l'on réalise la cuisson dans un four à circulation d'air à chauffage indirect, où la proportion d'air frais introduite dans le four à circulation d'air se situe dans l'intervalle allant de 0 à 20% en volume de l'air du four.

2. Procédé selon la revendication 1, **caractérisé en ce que** les nitrites et/ou nitrates organiques sont ajoutés en une quantité allant de 0,05 à 0,5% en poids, calculée comme l'azote présent sous forme de nitrite et/ou nitrate organique lié, sur base du corps solide de résine de l'agent de revêtement de peinture électrophorétique.

3. Procédé selon l'une quelconque des revendications précédentes, **caractérisé en ce que** l'on travaille pour un rapport d'espace du four à circulation d'air à chauffage indirect à la surface revêtue de l'agent de revêtement-peinture électrophorétique précipitable de manière cathodique à cuire, du substrat conducteur de l'électricité de jusqu'à 2 m³ par m².

4. Procédé selon l'une quelconque des revendications précédentes, **caractérisé en ce que** l'on ajoute comme nitrite et/ou nitrate organique, un ester d'acide nitreux et/ou d'acide nitrique d'un ou de plusieurs polymères mono- ou polyfonctionnels.

5. Procédé selon la revendication 4, **caractérisé en ce que** l'on ajoute du nitrate de cellulose.

6. Procédé selon la revendication 5, **caractérisé en ce que** le nitrate de cellulose présente une teneur en azote lié comme nitrate, allant de 6,7 à 12,5% en poids.

7. Procédé selon l'une quelconque des revendications précédentes, **caractérisé en ce que** l'on applique sur la couche de revêtement de peinture électrophorétique, une ou plusieurs couches ultérieures.

8. Procédé selon l'une quelconque des revendications 1 à 7, **caractérisé en ce que** l'on applique la couche de revêtement de peinture électrophorétique sur un véhicule automobile ou ses parties et ensuite, au moins partiellement, une couche de protection de bas de caisse.
